# EUROPEAN PATENT SPECIFICATION

(11) **EP 3 422 658 B1**
(45) Date of publication and mention of the grant of the patent: **05.08.2020**
(21) Application number: 17179065.2
(22) Date of filing: 30.06.2017
(51) Int. Cl.: H04L 29/06, H04L 29/08, H04L 12/801, H04L 5/00

(54) **COMMUNICATION DEVICE AND METHOD FOR REQUESTING COMMUNICATION RESOURCES**
KOMMUNIKATIONSVORRICHTUNG UND KOMMUNIKATIONSVERFAHREN ZUR ABFRAGE VON KOMMUNIKATIONSRESSOURCEN
DISPOSITIF DE COMMUNICATION ET PROCÉDÉ POUR DEMANDE DE RESSOURCES DE COMMUNICATION

(43) Date of publication of application: 02.01.2019
(73) Proprietor: Intel IP Corporation, Santa Clara, CA 95054 (US)
(72) Inventor: TOMAR, Aditya, 82008 Unterhaching (DE)
(74) Representative: Viering, Jentschura & Partner mbB Patent- und Rechtsanwälte

(56) References cited:
- US-A1- 2003 156 557
- US-A1- 2005 147 110
- US-A1- 2008 137 618

## Description

### Technical Field

Exemplary implementations described herein generally relate to communication devices and methods for requesting communication resources.

### Background

The response time for a TCP/IP connection is a highly desirable and sought-after feature by a user of a communication device and it can become an unpleasant or annoying experience in case it is too long. The response time depends on various factors such as delay in forwarding received packets in the data link layer of the communication device and delay by the network side to provide uplink communication resources for sending acknowledgments. Since it has such a high impact on user experience, mechanisms that allow reducing the response time for a TCP/IP connection or a similar connection, in particular according to a protocol that requires the sending of acknowledgements for packets, are desirable.

US 2005/147110 (Connor Patrick L. [US]) 2005-07-07 provides methods for identifying overrun conditions in data reception, for example by detecting that a receive buffer approaches capacity, and truncating received data packets to a smaller size or by saving header information but discarding payload data. In such cases, the truncated packets may be used to facilitate sending acknowledgments to trigger resending of lost or dropped packets.

US 2003/156557 (Kalden Roger et Al) 2003-08-21 discloses that in a data communication network a first and second network site , may communicate by sending a first data transmission from the first network site to a second network site and by sending a second data transmission from said second network site to said first network site . In order to avoid or reduce data transmission between the first and second network site, methods for correlation of the the radio resources for the second data transmission with the characteristics of the first data transmission by determining the characteristics of the first data transmission.

US2008/137618 (Sun Nak-Woon [KR] et Al) 2008-06-12 discloses a look-ahead bandwidth requesting method and a mobile terminal using the look-ahead bandwidth requesting method in a mobile communication system. The mobile terminal receives a downlink packet from a base station and transmits the downlink packet to a terminal equipment system. If the downlink packet received from the base station is a TCP packet, the mobile terminal transmits the TCP packet to the terminal equipment system and, at the same time, performs a bandwidth requesting procedure for being allocated a wireless resource through which a TCP ACK packet is to be transmitted to the base station. The bandwidth request is performed by using a random access procedure. The mobile terminal transmits the TCP ACK packet received from the terminal equipment system through the wireless resource that is allocated in advance by using the random access procedure to the base station. As a result, a random access delay is removed or minimized in a mobile terminal for uplink transmission in an asymmetric Internet traffic environment, so that an uplink transmission speed can be increased. Accordingly, a round-trip time of a TCP layer can be reduced, so that a high-speed service can be provided to an application program of a terminal equipment system.

### Brief Description of the Drawings

In the drawings, like reference characters generally refer to the same parts throughout the different views. The drawings are not necessarily to scale; emphasis instead generally being placed upon illustrating the principles of the invention. In the following description, various aspects are described with reference to the following drawings, in which:
- Figure 1: shows an exemplary communication system, e.g. an LTE (Long Term Evolution) communication system.
- Figure 2: shows a message flow diagram illustrating an approach where the communication subsystem waits for an acknowledgement from the application processor before requesting the uplink communication resources.
- Figure 3: shows a message flow diagram illustrating an approach where the communication subsystem requests uplink communication resources for transmitting an acknowledgement for a packet without waiting for receiving the acknowledgement from the application processor.
- Figure 4: shows a communication device.
- Figure 5: shows a flow diagram illustrating a method for requesting communication resources.

### Description of Exemplary Implementations

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

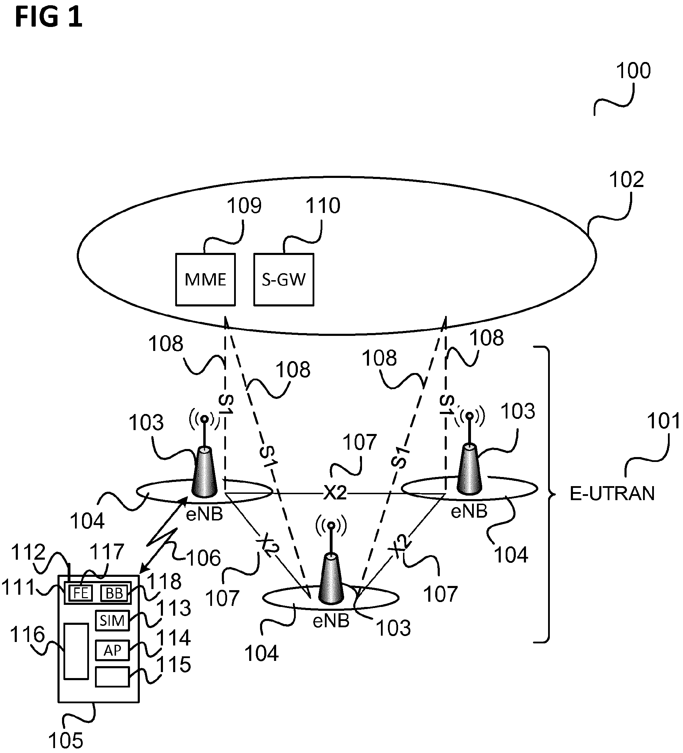

Figure 1 shows a communication system 100, e.g. an LTE (Long Term Evolution) communication system.

The communication system 100 includes a radio access network (e.g. an E-UTRAN, Evolved UMTS (Universal Mobile Communications System) Terrestrial Radio Access Network according to LTE) 101 and a core network (e.g. an EPC, Evolved Packet Core, according LTE) 102. The radio access network 101 may include base (transceiver) stations (e.g. eNodeBs, eNBs, according to LTE) 103. Each base station 103 provides radio coverage for one or more mobile radio cells 104 of the radio access network 101.

A mobile terminal (also referred to as UE, user equipment, or MS, mobile station) 105 located in a mobile radio cell 104 may communicate with the core network 102 and with other mobile terminals 105 via the base station providing coverage in (in other words operating) the mobile radio cell.

Control and user data are transmitted between a base station 103 and a mobile terminal 105 located in the mobile radio cell 104 operated by the base station 103 over the air interface 106 on the basis of a multiple access method.

The base stations 103 are interconnected with each other by means of a first interface 107, e.g. an X2 interface. The base stations 103 are also connected by means of a second interface 108, e.g. an S1 interface, to the core network, e.g. to an MME (Mobility Management Entity) 109 and a Serving Gateway (S-GW) 110. For example, the MME 109 is responsible for controlling the mobility of mobile terminals located in the coverage area of E-UTRAN, while the S-GW 110 is responsible for handling the transmission of user data between mobile terminals 105 and core network 102.

The radio access network 101 and the core network 102 may support communication according to various communication technologies, e.g. mobile communication standards. For example, each base station 103 may provide a radio communication connection via the air interface between itself and the mobile terminal 105 according to LTE, UMTS, GSM (Global System for Mobile Communications), EDGE (Enhanced Data Rates for GSM Evolution) or 5G (Fifth Generation) radio access. Accordingly, the radio access network 102 may operate as an E-UTRAN, a UTRAN, a GSM radio access network, a GERAN (GSM EDGE Radio Access Network) or a 5G radio access network. Analogously, the core network 102 may include the functionality of an EPC, a UMTS core network, a GSM core network or a 5G core network.

For radio communication via the air interface 106, the mobile terminal 105 includes a communication subsystem 111 and one or more antennas 112 and one or more multiple subscriber identity modules 113. The mobile terminal 105 also includes an application processor 114 as well as a main memory 115 for running applications. The mobile terminal 105 further includes a battery 116 for power supply. The mobile terminal 105 may include further components such as a display, a speaker, a microphone etc. The communication subsystem 111 may include a radio frequency transceiver (e.g. including a radio frontend) 117 and a baseband processor 118.

The LTE UE architecture data plane processing is divided in physical layer, protocol stack layer and application layer, e.g. according to the OSI (Open System Interconnection) reference model, wherein the protocol stack layer for example include communication layers between the physical layer and the application layer such as the data link layer, the network layer and the transport layer, e.g. including the PDCP (Packet Data Convergence Protocol) layer, the MAC (Medium Access Control) layer and the RRC (Radio Resource Control) layer in case of LTE.

The mobile terminal 105 may in particular be provided with a TCP/IP (Transmission Control Protocol/IP Protocol) connection over the air interface 106, e.g. to a server in the Internet via the radio access network 101 and the core network 102.

In practical applications, a typical complaint from customers is a high response time in TCP/IP connections. For a customer, this may become relevant to a point to become a critical factor to choose between different products in market.

In the following, to improve response time of TCP/IP connections, approaches for Fast uplink Grant Acquisition are described. Fast uplink Grant Acquisition targets to improve end user experience by acquiring uplink (Uplink) grants (i.e. grants from the radio access network 101 for communication resources for the mobile terminal 105 for uplink data transmission) fast to achieve a low round-trip time and an enhanced end user experience.

A mechanism for Fast uplink Grant Acquisition may for example based on the usage of an IP Header Sniffer, e.g. implemented in an entity of the mobile terminal which is doing MAC transport block header analysis and deciphering, to indicate arrival of a downlink TCP packet towards a layer 2 entity of the mobile terminal. The mobile terminal may thus send a scheduling request (e.g. a request for uplink communication resources) immediately to the radio access network without waiting for the feedback, i.e. a TCP ACK (acknowledgement) from the application processor of the mobile terminal.

Furthermore, any data bundling on layer 2 or PS-FW (packet switched firmware) level which could delay forwarding of the first downlink TCP packet after a wakeup from DRX (discontinuous reception) or idle mode may be omitted according to various examples.

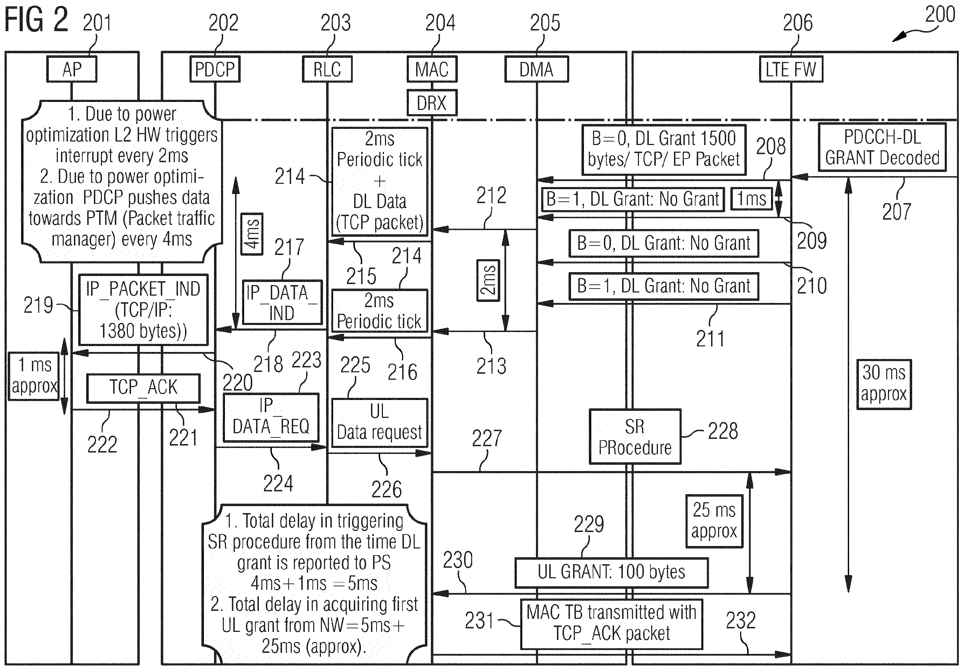

At first, with reference to figure 2, an approach is described for reference which includes waiting for the TCP ACK from the application processor before requesting uplink resources for transmitting the acknowledgement.

Figure 2 shows a message flow diagram 200 illustrating an approach where the communication subsystem waits for an acknowledgement from the application processor before requesting the uplink communication resources.

The message flow takes place between components of a communication device, e.g. corresponding to mobile terminal 105, namely an application processor 201, a PDCP unit 202, an RLC unit 203, a MAC unit 204, a DMA (direct memory access) unit (e.g. DMA hardware) 205 and LTE firmware 206. The PDCP unit 202, the RLC unit 203, the MAC unit 204 and the DMA unit 205 may be regarded as entities of the LTE data plane. The PDCP unit 202, the RLC unit 203, the MAC unit 204, the DMA (direct memory access) unit 205 and the LTE firmware 206 may be implemented by a baseband processor. The baseband processor may be connected at a level of the LTE firmware 206 to a radio frequency transceiver, e.g. frontend components like one or more amplifiers, filters and antennas. The LTE firmware 206 may for example include a Turbo Decoder which processes a signal received by the frontend components and supplied to the baseband processor. The output of this processing may be a MAC transport block. The baseband processor may be connected to the application processor 201 via a PCIe or USB interface.

It is assumed that the mobile terminal is at first in DRX mode (or alternatively in idle mode). In 207, the LTE firmware 206 receives downlink data (e.g. on PDCCH (Physical Downlink Control Channel) from the frontend components which the frontend components have received from a mobile network, e.g. radio access network 101.

In 208 to 211, the LTE firmware forwards the downlink data in form of successive downlink packets to the DMA unit 205 which performs a bundling before forwarding the data packets to the MAC unit 204. The DMA unit 205 forwards the first two downlink packets (of 208 and 209) to the MAC unit 204 in 212 and the second two downlink packets (of 210 and 211) to the MAC unit 204 in 213, i.e. bundles every two downlink packets 208. The time difference between the forwarding of two downlink packets from the LTE firmware 206 is for example 1 ms such that the time difference between the forwarding of two bundles of downlink packets from the DMA unit to the MAC unit in 212 and 213 is 2 ms. In other words, the DMA unit 205 only forwards downlink packets every 2 ms.

The MAC unit 204 performs MAC layer processing and forwards the MAC processed bundles of downlink packets 214, i.e. the MAC processed downlink data, in 215 and 216 to the RLC unit 205.

The RLC unit 205 performs RLC layer processing and, in this example, forwards RLC and PDCP processed downlink data 217 to the PDCP unit 202 in 218 for every 4 ms, i.e. waits until it has received two MAC processed bundles of downlink packets 214 before forwarding them together (after RLC and PDCP processing) to the PDCP unit 202. It should be noted that the 4 ms are only an example. Other values are also possible, e.g. 6 ms. The overall delay depends on this value.

The PDCP 202 performs PDCP processing and forwards the RLC and PDCP processed downlink data 219 to the application processor 201 in 220.

It is assumed that the downlink data includes a TCP/IP message which requires an acknowledgement and that the application processor 201 takes 1 ms to generate a TCP acknowledgement message 221 and send it to the PDCP unit 202 in 222.

The PDCP unit 202 performs PDCP processing of the TCP acknowledgement message 221 and sends, in 224, the PDCP processed TCP acknowledgement message 221 with an uplink transmission request 223 to the RLC unit 203 which performs RLC processing and sends the PDCP and RLC processed TCP acknowledgement message 225 to the MAC unit 204 in 226 with a request for an uplink transmission of this message.

The MAC unit 204 performs a scheduling procedure in 227 by sending a scheduling request 228 to the network via the LTE firmware 206. It is assumed that the mobile terminal receives an uplink grant 229 from the network which the LTE firmware 206 forwards in 230 to the MAC unit 204, after a typical time of e.g. 25ms since the sending of the scheduling request 228. The MAC unit 204 then sends a MAC layer transport block 231 including the TCP acknowledgement to the LTE firmware 204 in 232 for transmitting it to the network.

In summary, the approach of figure 2 takes approx. 25ms (RTT for uplink grant after sending Scheduling request) plus 5ms (time between reception of the first TCP downlink packet in 206 and reception of TCP acknowledgement from the application processor in 222), i.e. approx. 30ms to acquire the first uplink grant after the first TCP downlink packet after wakeup from DRX (or idle) mode.

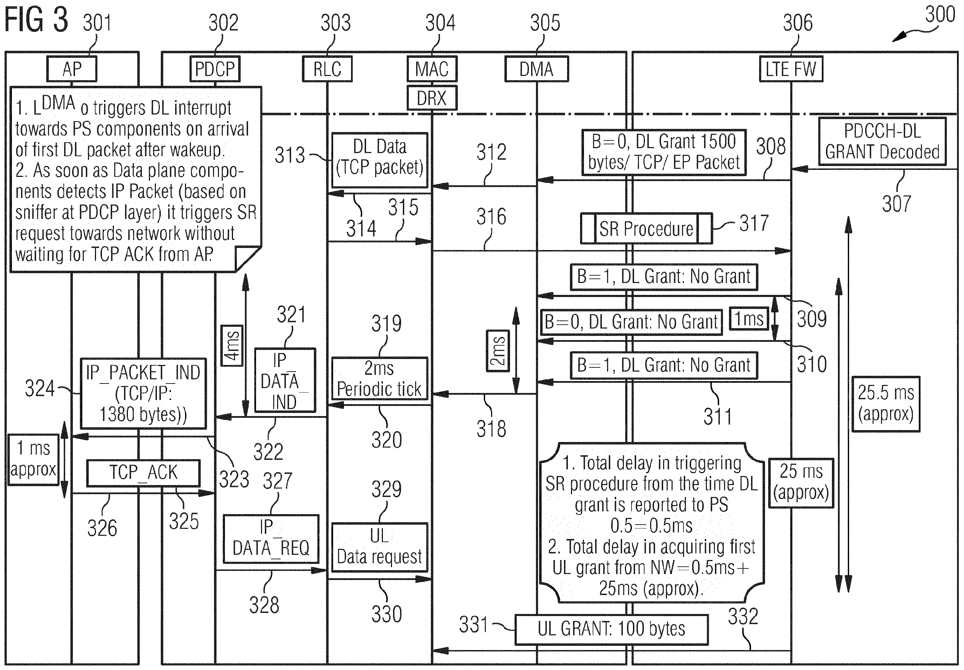

In the following, an approach is described with reference to figure 3 in which the delay within the LTE (or 3G or 5G) protocol stack and application processor is reduced in comparison to the approach of figure 2 by applying a sniffer, e.g. in a data path accelerator, to sniff an IP Header of downlink data (i.e. to perform packet inspection) after deciphering the downlink data.

Figure 3 shows a message flow diagram 300 illustrating an approach where the communication subsystem requests uplink communication resources for transmitting an acknowledgement for a TCP packet without waiting for receiving the acknowledgement from the application processor.

Similarly, to the message flow of figure 2, the message flow of figure 3 takes place between components of a communication device, e.g. corresponding to mobile terminal 105, namely an application processor 301, a PDCP unit 302, an RLC unit 303, a MAC unit 304, a DMA unit (e.g. DMA hardware) 305 and LTE firmware 306. The PDCP unit 302, the RLC unit 303, the MAC unit 304 and the DMA unit 305 may be regarded as entities of the LTE data plane. The PDCP unit 302, the RLC unit 303, the MAC unit 304, the DMA unit 305 and the LTE firmware 306 may be implemented by a baseband processor. The baseband processor may be connected at a level of the LTE firmware 306 to a radio frequency transceiver e.g. including frontend components like one or more amplifiers, filters and antennas. The LTE firmware 306 may for example include a Turbo Decoder which processes a signal received by the frontend components and supplied to the baseband processor. The output of this processing may be a MAC transport block. The baseband processor may be connected to the application processor 301 via a PCIe or USB interface.

It is assumed that the mobile terminal is at first in DRX mode (or alternatively in idle mode). In 307, the LTE firmware 306 receives downlink data 307 (e.g. on PDCCH (Physical Downlink Control Channel) from the frontend components which the frontend components have received from a mobile network, e.g. radio access network 101.

In 308 to 311, the LTE firmware forwards the downlink data in form of successive downlink packets to the DMA unit 305. In this example, in contrast to the example of figure 2, the DMA unit 305 does not perform bundling for the first downlink packet but immediately forwards the first downlink packet (of 308) to the MAC unit 304 in 312.

The MAC unit 304 performs MAC layer processing and forwards the MAC processed downlink packet 313, i.e. the MAC processed downlink data, in 314 to the RLC unit 305.

The RLC unit 305 performs packet sniffing for detecting TCP packet. For example, a sniffer in the PDCP layer of the mobile terminal detects that the MAC downlink packet includes a TCP packet. In response, the RLC unit 305, in 315, instructs the MAC unit 304 to request communication resources for an uplink transmission of a TCP acknowledgement from the network.

Accordingly, in 316, the MAC unit 304 performs a scheduling procedure by sending a scheduling request 317 to the network via the LTE firmware 306.

For the other downlink packets (of 309 to 310) the DMA unit 205 may perform a bundling before forwarding the data packets to the MAC unit 204 in 318.

The MAC unit 304 performs MAC layer processing of the bundled downlink packets and forwards the MAC processed bundles of downlink packets 319 in 320 to the RLC unit 305.

The RLC unit 305 performs RLC layer processing of the MAC processed data packets 313 and 319 and forwards the resulting RLC processed downlink data 321 to the PDCP unit 302 in 322.

The PDCP unit 302 performs PDCP processing and forwards the RLC and PDCP processed downlink data 324 to the application processor 301 in 323.

Since the downlink data includes a TCP/IP message which requires an acknowledgement the application processor 301 generates a TCP acknowledgement message 325 and sends it to the PDCP unit 302 in 326.

The PDCP unit 302 performs PDCP processing of the TCP acknowledgement message and sends, in 328, the PDCP processed TCP acknowledgement message with an uplink transmission request 327 to the RLC unit 303 which performs RLC processing and sends the PDCP and RLC processed TCP acknowledgement message 329 to the MAC unit 304 in 330 with a request for an uplink transmission of this message.

It is assumed that the mobile terminal receives an uplink grant 331 from the network which the LTE firmware 306 forwards in 332 to the MAC unit 204, after a typical time of e.g. 25ms since the sending of the scheduling request 317. The MAC unit 204 can then sends a MAC layer transport block including the TCP acknowledgement to the LTE firmware for transmitting it to the network much faster after receiving the (PDCP and RLC processed) TCP acknowledgement message 329 than in the approach of figure 2.

Specifically, the expected time to acquire the first uplink grant after the first TCP downlink packet after wakeup from DRX (or idle) mode is 25 ms + 0.5ms i.e. 25.5ms which is around 4.5 ms faster than the approach of figure 2.

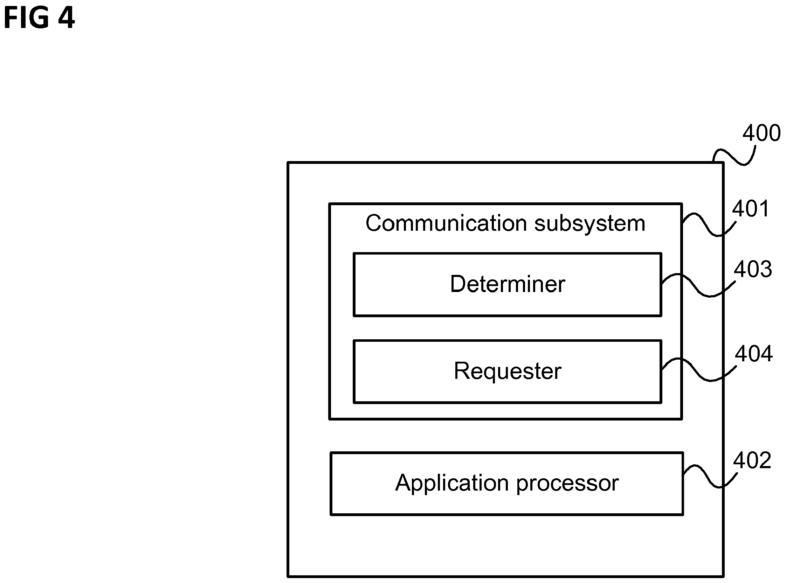

In summary, according to various examples, a communication device is provided as illustrated in figure 4.

Figure 4 shows a communication device 400.

The communication device 400 includes a communication subsystem 401 and an application processor 402. The communication subsystem 401 may for example include a baseband processor and a radio transceiver.

The communication subsystem 401 includes, e.g. implemented by a baseband processor, a determiner 403 configured to determine, for a message received by the communication subsystem 401 from a communication network, whether a reception of the message is to be acknowledged by the application processor 402 and a requester 404 configured to request communication resources from the communication network to send an acknowledgement of a reception of the message by the application processor 402.

According to various examples, in other words, a communication subsystem of a communication device determines whether communication resources for an uplink transmission of an acknowledgement for a message are needed and requests the communication resources before an application processor actually provides the acknowledgement.

For example, a faster acquisition of uplink grants for a TCP/IP connection, in particular under fluctuating radio channel conditions, can be achieved in this manner, e.g. in comparison with an approach where the communication subsystem waits for an acknowledgement from the application processor before requesting the uplink communication resources. This may improve end user experience by means of a reduced RTT and a faster connection time. The approach of figure 4 may be especially helpful in future cellular standards e.g. 5G, where use cases can be expected where response time is critical, e.g. in autonomous driving.

In comparison with an approach where the communication subsystem waits for an acknowledgement from the application processor before requesting the uplink communication resources (e.g. based on a direct implementation of the current 3GPP standard) the approach of figure 4 can be seen to be based on an addition of intelligence in the communication subsystem (i.e. "below" the application processor from a layer perspective) in the process of uplink grant acquisition.

An exemplary use case is that the communication device is a UE (user equipment) and is in DRX and its LTE firmware decodes a downlink grant in PDCCH. The LTE firmware decodes downlink data on the PDCCH and triggers a corresponding downlink interrupt towards the UE's Protocol Stack entities (e.g. units implementing, MAC, RLC and PDCP), e.g. received by a DMA unit. The MAC unit decodes the MAC header and informs other layer 2 entities about the valid downlink packet.

As described with reference to figure 2, there may be a 2 ms data bundling at the DMA unit and a 4 ms data bundling in the PDCP layer (wherein the 4 ms, as mentioned above, are only an example and other values may be used). In this case, the first IP packet is delivered to the application processor after 4 ms from the point in time the packet was received by the layer 2 entities. Furthermore, if a scheduling request for sending a TCP acknowledgement is triggered towards the network only after reception of a TCP acknowledgement from the application processor, which is provided by the application processor after approx. 1ms of delay the scheduling request procedure can be expected, in the approach of figure 2, to be triggered after approx. 5ms from first downlink packet reception after wakeup (from a DRX low power state phase or idle mode).

In the approach of figure 4 (and the example of figure 3), the delay in triggering a scheduling request for uplink resources for transmitting a TCP acknowledgement may be reduced by introducing a IP Packet sniffer within the communication subsystem, e.g. in a baseband processor in layer 2 to indicate to one or more layer 2 entities that a received packet contains a TCP packet such that the layer 2 entities may immediately trigger the scheduling request.

The delay may further may be reduced by discarding any data bundling for the first downlink packet received after wakeup from a receiver low power phase (e.g. according to DRX or an idle mode of the mobile terminal, e.g. an RRC (Radio Resource Connection) idle mode).

The communication device (e.g. the determiner and the requester) may for example be implemented by one or more processors. A "processor" may be understood as any kind of a logic implementing entity, which may be special purpose circuitry or a processor executing software stored in a memory, firmware, or any combination thereof. Thus a "processor" may be a hard-wired logic processor or a programmable logic processor such as a programmable processor, e.g. a microprocessor. A "processor" may also be a processor executing software, e.g. any kind of computer program. Any other kind of implementation of the respective functions which will be described in more detail below may also be understood as a "processor". The communication device may for example be a communication terminal such as a portable phone and may include typical communication terminal devices such as a communication subsystem (including e.g. a baseband processor, one or more filters, transmit chains, receive chains, amplifiers etc.), an antenna, a subscriber identity module, an application processor, a memory, a display, a battery, a speaker, a microphone etc.

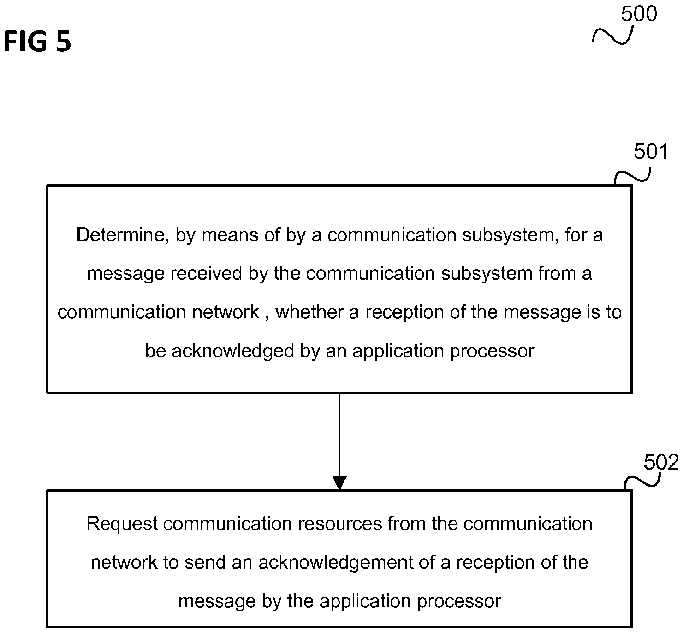

The communication device 400 for examples carries out a method as illustrated in figure 5.

Figure 5 shows a flow diagram 500 illustrating a method for requesting communication resources, for example carried out by a communication device.

In 501, a communication subsystem of the communication device determines, for a message received from a communication network by, whether a reception of the message is to be acknowledged by an application processor (e.g. of the communication device). The communication subsystem may comprise a baseband processor and a radio transceiver.

In 502, the communication device requests communication resources from the communication network to send an acknowledgement of a reception of the message by the application processor.

While specific aspects have been described, it should be understood by those skilled in the art that various changes in form and detail may be made therein without departing from the scope of the aspects of this disclosure as defined by the appended claims. The scope is thus indicated by the appended claims.

## Claims

1. A communication device (400) comprising: a communication subsystem (401) configured to receive a message from a communication network; and
an application processor (402);
wherein the communication subsystem (401) further comprises an interface to the application processor (402) configured to forward the message to the application processor (402); and
wherein the communication subsystem (401) comprises
- an IP header sniffer (403) implemented in an entity of the communication device which is configured to perform MAC transport block header analysis and deciphering and configured to determine, for the message received by the communication subsystem (401), whether a reception of the message is to be acknowledged by the application processor (402) by determining whether a TCP packet is included in a MAC downlink packet included in the received message; and
- a requester (404) configured to request radio uplink communication resources from the communication network to send an acknowledgement of a reception of the message by the application processor (402) responsive to the IP header sniffer (403) determining that the reception of the message is to be acknowledged by the application processor (402);
wherein the requester (404) is configured to request the communication resources before the interface forwards the message to the application processor (402);
wherein the communication subsystem (401) is configured to receive the message in the form of a sequence of data packets and the IP header sniffer (403) is configured to determine whether a reception of the message is to be acknowledged by the application processor (402) by means of a packet inspection of the first data packet of the sequence of data packets; and
wherein the communication subsystem (401) is configured to avoid bundling the first data packet with other data packets of the sequence of data packets in the data link layer before performing the packet inspection of the first data packet.

2. The communication device (400) of claim 1, wherein a baseband processor of the communication subsystem (401) implements the IP packet sniffer (403) and the requester (404).

3. The communication device (400) of claim 1, wherein the interface is configured to receive an acknowledgement of a reception of the message from the application processor (402) and the communication subsystem (401) is configured to transmit the acknowledgement to the network based on the requested communication resources.

4. The communication device (400) of any one of claims 1 to 3, wherein the requester (404) is configured to request the communication resources before the interface receives an instruction from the application processor (402) to request communication resources for transmitting the acknowledgement.

5. The communication device (400) of any one of claims 1 to 4, wherein the requester (404) is configured to request the communication resources before the interface receives the acknowledgement from the application processor (402).

6. The communication device (400) of any one of claims 1 to 5, wherein the requester (404) is configured to request the communication resources by means of a scheduling procedure.

7. A method for requesting communication resources comprising:
- an IP header packet sniffer (403) of a communication subsystem (401), implemented in an entity of a communication device which is configured to perform MAC transport block header analysis and deciphering, determining for a
message received from a communication network by the communication subsystem (401) in form of a sequence of data packets, whether a reception of the message is to be acknowledged by an application processor (402) to which the message is to be forwarded by the communication subsystem (401) by sniffing whether a TCP packet is included in a MAC downlink packet included in the received message by a packet inspection of the first data packet of the sequence of data packets, wherein the first data packet is not bundled with other data packets of the sequence of data packets in the data link layer by the communication subsystem (401) before performing the packet inspection of the first data packet;
- requesting, before forwarding the message to the application processor (402), responsive to determining that the reception of the message is to be acknowledged by the application processor (402), radio uplink communication resources from the communication network to send an acknowledgement of a reception of the message by the application processor (402).

## Patentansprüche

1. Kommunikationsvorrichtung (400), Folgendes umfassend:
ein Kommunikationsteilsystem (401), das dafür konfiguriert ist, eine Nachricht von einem Kommunikationsnetz zu empfangen, und
einen Anwendungsprozessor (402),
wobei das Kommunikationsteilsystem (401) ferner eine Schnittstelle zu dem Anwendungsprozessor (402) umfasst, die dafür konfiguriert ist, die Nachricht an den Anwendungsprozessor (402) weiterzuleiten, und
wobei das Kommunikationsteilsystem (401) Folgendes umfasst:
- einen IP-Header-Sniffer (403), der in einer Entität der Kommunikationsvorrichtung umgesetzt ist, die dafür konfiguriert ist, eine MAC-Transport-Block-Header-Analyse und -Dechiffrierung durchzuführen, und dafür konfiguriert ist, für die Nachricht, die durch das Kommunikationsteilsystem (401) empfangen wird, zu bestimmen, ob ein Empfang der Nachricht von dem Anwendungsprozessor (402) zu bestätigen ist, indem bestimmt wird, ob in einem MAC-Downlink-Paket, das in der empfangenen Nachricht enthalten ist, ein TCP-Paket enthalten ist, und
- einen Anforderer (404), der dafür konfiguriert ist, Funk-Uplink-Kommunikationsressourcen von dem Kommunikationsnetz anzufordern, um eine Bestätigung eines Empfangs der Nachricht durch den Anwendungsprozessor (402) in Reaktion darauf zu senden, dass der IP-Header-Sniffer (403) bestimmt, dass der Empfang der Nachricht durch den Anwendungsprozessor (402) zu bestätigen ist,
wobei der Anforderer (404) dafür konfiguriert ist, die Kommunikationsressourcen anzufordern, bevor die Schnittstelle die Nachricht an den Anwendungsprozessor (402) weiterleitet,
wobei das Kommunikationsteilsystem (401) dafür konfiguriert ist, die Nachricht in Form einer Abfolge von Datenpaketen zu empfangen und der IP-Header-Sniffer (403) dafür konfiguriert ist zu bestimmen, ob ein Empfang der Nachricht durch den Anwendungsprozessor (402) mittels einer Paketinspektion des ersten Datenpakets der Abfolge von Datenpaketen zu bestätigen ist, und
wobei das Kommunikationsteilsystem (401) dafür konfiguriert ist, vor dem Durchführen der Paketinspektion des ersten Datenpakets ein Bündeln des ersten Datenpakets mit anderen Datenpaketen der Abfolge von Datenpaketen in der Datenlinkschicht zu vermeiden.

2. Kommunikationsvorrichtung (400) nach Anspruch 1, wobei ein Basisbandprozessor des Kommunikationsteilsystems (401) den IP-Paket-Sniffer (403) und den Anforderer (404) umsetzt.

3. Kommunikationsvorrichtung (400) nach Anspruch 1, wobei die Schnittstelle dafür konfiguriert ist, eine Bestätigung eines Empfangs der Nachricht von dem Anwendungsprozessor (402) zu empfangen, und das Kommunikationsteilsystem (401) dafür konfiguriert ist, die Bestätigung basierend auf den angeforderten Kommunikationsressourcen an das Netz zu senden.

4. Kommunikationsvorrichtung (400) nach einem der Ansprüche 1 bis 3, wobei der Anforderer (404) dafür konfiguriert ist, die Kommunikationsressourcen anzufordern, bevor die Schnittstelle einen Befehl von dem Anwendungsprozessor (402) empfängt, die Kommunikationsressourcen für das Übertragen der Bestätigung anzufordern.

5. Kommunikationsvorrichtung (400) nach einem der Ansprüche 1 bis 4, wobei der Anforderer (404) dafür konfiguriert ist, die Kommunikationsressourcen anzufordern, bevor die Schnittstelle die Bestätigung von dem Anwendungsprozessor (402) empfängt.

6. Kommunikationsvorrichtung (400) nach einem der Ansprüche 1 bis 5, wobei der Anforderer (404) dafür konfiguriert ist, die Kommunikationsressourcen mit Hilfe eines Zeitplanungsvorgangs anzufordern.

7. Verfahren zum Anfordern von Kommunikationsressourcen, Folgendes umfassend:
- einen IP-Header-Paket-Sniffer (403) eines Kommunikationsteilsystems (401), der in einer Entität einer Kommunikationsvorrichtung umgesetzt ist, die dafür konfiguriert ist, eine MAC-Transport-Block-Header-Analyse und -Dechiffrierung durchzuführen, Bestimmen für eine Nachricht, die durch das Kommunikationsteilsystem (401) von einem Kommunikationsnetz in Form einer Abfolge von Datenpaketen empfangen wird, ob ein Empfang der Nachricht von einem Anwendungsprozessor (402) zu bestätigen ist, an den die Nachricht durch das Kommunikationsteilsystem (401) weiterzuleiten ist, indem durch eine Paketinspektion des ersten Datenpakets der Abfolge von Datenpaketen festgestellt wird, ob in einem MAC-Downlink-Paket, das in der empfangenen Nachricht enthalten ist, ein TCP-Paket enthalten ist, wobei das erste Datenpaket durch das Kommunikationsteilsystem (401) nicht mit anderen Datenpaketen der Abfolge von Datenpaketen in der Datenlinkschicht gebündelt wird, bevor die Paketinspektion des ersten Datenpakets durchgeführt ist,
- in Reaktion darauf, dass bestimmt wird, dass der Empfang der Nachricht durch den Anwendungsprozessor (402) zu bestätigen ist, Anfordern von Funk-Uplink-Kommunikationsressourcen von dem Kommunikationsnetz vor dem Weiterleiten der Nachricht an den Anwendungsprozessor (402), um eine Bestätigung eines Empfangs der Nachricht durch den Anwendungsprozessor (402) zu senden.

## Revendications

1. Dispositif de communication (400), comprenant :
un sous-système de communication (401) configuré pour recevoir un message depuis un réseau de communication ; et
un processeur d'application (402) ;
le sous-système de communication (401) comprenant en outre une interface avec le processeur d'application (402) configurée pour retransmettre le message au processeur d'application (402) ; et
le sous-système de communication (401) comprenant :
- un renifleur d'en-tête IP (403) mis en œuvre dans une entité du dispositif de communication, qui est configuré pour réaliser une analyse et un déchiffrement d'en-tête de bloc de transport MAC et configuré pour déterminer, pour le message reçu par le sous-système de communication (401), si une réception du message doit être acquittée ou non par le processeur d'application (402) en déterminant si un paquet TCP est contenu ou non dans un paquet MAC de liaison descendante contenu dans le message reçu ; et
- un demandeur (404) configuré pour demander des ressources de communication radio de liaison montante auprès du réseau de communication pour envoyer un acquittement d'une réception du message par le processeur d'application (402) en réponse à la détermination, par le renifleur d'en-tête IP (403) que la réception du message doit être acquittée par le processeur d'application (402) ;
le demandeur (404) étant configuré pour demander les ressources de communication avant que l'interface ne retransmette le message au processeur d'application (402) ;
le sous-système de communication (401) étant configuré pour recevoir le message sous la forme d'une séquence de paquets de données et le renifleur d'en-tête IP (403) étant configuré pour déterminer si une réception du message doit être acquittée ou non par le processeur d'application (402) au moyen d'une inspection de paquet du premier paquet de données de la séquence de paquets de données ; et
le sous-système de communication (401) étant configuré pour éviter de grouper le premier paquet de données avec d'autres paquets de données de la séquence de paquets de données dans la couche liaison de données avant de réaliser l'inspection de paquet du premier paquet de données.

2. Dispositif de communication (400) selon la revendication 1, dans lequel un processeur en bande de base du sous-système de communication (401) met en œuvre le renifleur de paquet IP (403) et le demandeur (404).

3. Dispositif de communication (400) selon la revendication 1, dans lequel l'interface est configurée pour recevoir un acquittement d'une réception du message depuis le processeur d'application (402), et le sous-système de communication (401) est configuré pour transmettre l'acquittement au réseau sur la base des ressources de communication demandées.

4. Dispositif de communication (400) selon l'une quelconque des revendication 1 à 3, dans lequel le demandeur (404) est configuré pour demander les ressources de communication avant que l'interface ne reçoive une instruction depuis le processeur d'application (402) pour demander des ressources de communication pour la transmission de l'acquittement.

5. Dispositif de communication (400) selon l'une quelconque des revendications 1 à 4, dans lequel le demandeur (404) est configuré pour demander les ressources de communication avant que l'interface ne reçoive l'acquittement depuis le processeur d'application (402).

6. Dispositif de communication (400) selon l'une quelconque des revendications 1 à 5, dans lequel le demandeur (404) est configuré pour demander les ressources de communication au moyen d'une procédure d'ordonnancement.

7. Procédé de demande de ressources de communication, comprenant :
- la détermination, par un renifleur de paquet à en-tête IP (403) d'un sous-système de communication (401), mis en œuvre dans une entité d'un dispositif de communication qui est configuré pour réaliser une analyse et un déchiffrement d'en-tête de bloc de transport MAC, pour un message reçu depuis un réseau de communication par le sous-système de communication (401) sous la forme d'une séquence de paquets de données, si une réception du message doit être acquittée ou non par un processeur d'application (402) auquel le message doit être retransmis par le sous-système de communication (401) par reniflage si un paquet TCP est contenu ou non dans un paquet MAC de liaison descendante contenu dans le message reçu par une inspection de paquet du premier paquet de données de la séquence de paquets de données, le premier paquet de données n'étant pas groupé avec d'autres paquets de données de la séquence de paquets de données dans la couche liaison de données par le sous-système de communication (401) avant la réalisation de l'inspection de paquet du premier paquet de données ;
- la demande, avant la retransmission du message au processeur d'application (402), en réponse à la détermination que la réception du message doit être acquittée par le processeur d'application (402), de ressources de communication radio de liaison montante auprès du réseau de communication pour envoyer un acquittement d'une réception du message par le processeur d'application (402).
